# EUROPÄISCHE PATENTANMELDUNG

(11) **EP 1 275 959 A2**
(43) Veröffentlichungstag der Anmeldung: **15.01.2003**
(21) Anmeldenummer: 02015095.9
(22) Anmeldetag: 05.07.2002
(51) Int. Cl.: G01N 30/32, G01N 30/46

(54) **Mehrkanalsystem für eine Analyse von gelösten Proben und Verfahren zum Speisen von zwei oder mehr Zweigen eines solchen Mehrkanalsystems**

(30) Priorität: 08.07.2001 DE 10132097
(71) Anmelder: Flux Instruments AG, 4002 Basel (CH)
(72) Erfinder: Abele, Karl Herbert, 4102 Binningen (CH)
(74) Vertreter: Leonhard, Frank Reimund, Dipl.-Ing.

(57) **Zusammenfassung**

Es ist Aufgabe der Erfindung, mit nur einer einzigen Pumpe und einer einzigen Splittingeinrichtung zumindest zwei hydraulisch miteinander kommunizierende Kapillar-Trennsäulen bei gleich bleibender Förderleistung der alle versorgenden Pumpe mittels konstant gehaltenem Systemdruck zu speisen. Vorgeschlagen wird dazu ein Mehrkanalsystem für die Analyse von gelösten Proben mittels Kapillarsäulen-Flüssigkeits-Chromatographie, mit nur einer Pumpe (1;21) zur Erzeugung eines kontinuierlichen Förderstroms einer mobilen Phase in einem Haupt-Strömungskanal (2) als Einspeisungssystem. Zwei oder mehr als zwei von einem stark herabgesetzten Anteil des Förderstroms durchströmbare Kapillar-Trennsäulen-Kanäle (5) sind an den Strömungskanal (2,26) angeschlossen. Eine Ableitung (8) in einem stromabwärts liegenden Endbereich des Strömungskanals (2,26) ist zum Ableiten eines Hauptanteils des Förderstroms über einen Ableitungsquerschnitt (15) vorgesehen, der in Abhängigkeit von Druckänderungen im Einspeisungssystem so veränderbar ist, daß den mehreren Kapillar-Trennsäulen-Kanälen (5) der weit kleinere (gesplittete) Anteil als mobile Phase jeweils unter einem im wesentlichen konstanten Druck zuspeisbar ist.

## Beschreibung

Die Erfindung betrifft ein Verfahren zum Speisen von zwei oder mehr parallelen, hydraulisch miteinander kommunizierenden Trennsäulen von Analysensystemen oder in Analysensystemen zum Nachweis und zur quantitativen Bestimmung von gelösten Proben, mittels Flüssigkeits-Chromatographie an Kapillarsäulen (Kapillarsäulen-HPLC), z.B. in Kopplung mit Massenspektroskopie als Nachweismethode oder in Verbindung mit kombinatorischer Chemie.

Flüssigkeits-Chromatographie ist ein Trennverfahren, das auf der unterschiedlichen Verteilbarkeit der zu analysierenden Verbindungen zwischen einer stationären und einer mobilen Phase beruht. In der pharmazeutischen Industrie wird heute in grossem Umfang das Verfahren der Kapillar-Flüssigkeits-Chromatographie als Analysentechnik für gelöste Proben verwendet. Gegenüber der konventionellen Flüssigkeitschromatographie (HPLC) bietet die Kapillar-HPLC eine um ein vielfaches gesteigerte Nachweisempfindlichkeit sowie eine Vereinfachung bei der Kopplung mit massenspektrometrischen Detektoren. Vor allem in den Bereichen der kombinatorischen Chemie und im Life-Science Bereich (z.B. Proteomics) kommt dem Probendurchsatz (Anzahl pro Zeiteinheit) entscheidende Bedeutung zu.

Zur Erhöhung des Probendurchsatzes werden neuerdings parallele Mehr- und Vielkanal-Systeme eingesetzt. Diese Systeme haben eine Vielzahl paralleler Analysenkanäle.

Bei der Kapillarsäulen-HPLC ist es ausserdem bekannt, den Förderstrom einer Pumpe in einen Hauptanteil (Hauptvolumen je Zeiteinheit) und in einen Teil, der für die Durchführung der Analyse genutzt wird (Nutzvolumen je Zeiteinheit), aufzuteilen, d.h. zu splitten. Der Hauptanteil wird dabei verworfen und im Nebenstrom abgeleitet. Die Volumenverhältnisse zwischen nutzbarem Anteil (Nutzanteil) und verworfenem Hauptanteil liegen typischerweise im Bereich von 1:500 bis 1:100. Um bei diesem Verfahren reproduzierbare Analysenergebnisse zu erzielen, ist ein hoher instrumenteller Aufwand erforderlich, da für jeden Kapillarsäulen-Kanal eine eigene Pumpe und eine eigene Splittingvorrichtung vorgesehen werden müssen.

Eine Vielzahl von Analysenkanälen oder Trennsäulen zu speisen, und zwar mit nur einer Pumpe in Verbindung mit nur einer Splittingeinrichtung wäre theoretisch unter der idealen Voraussetzung möglich, daß sich die Filtrierbarkeit der beteiligten Trennsäulen nicht ändert. In der Praxis ist es jedoch so, daß sich eine oder mehrere Trennsäulen teilweise oder ganz zusetzen können, z.B. durch Eintrag bestimmter Probenbestandteile, mit der Folge, daß der Systemdruck ansteigt, weil sich der Ableitungsquerschnitt in der Summe (nutzbarer Anteil und abgeleiteter Hauptanteil) verringert. Dadurch verändert sich der individuelle Durchsatz der mobilen Phase an den hydraulisch miteinander kommunizierenden Säulen in nicht mehr reproduzierter Weise. Eine qualitative und quantitative Auswertung der Analysenergebnisse wird unmöglich. Gleichzeitig besteht die Gefahr, daß ein kritischer System- oder maximal zulässiger Betriebsdruck für die Kapillar-Trennsäulen überschritten wird.

Es ist **Aufgabe der Erfindung,** hier Abhilfe zu schaffen und einen Weg aufzuzeigen, mit nur einer einzigen Pumpe und einer einzigen Splittingeinrichtung zumindest zwei oder eine Vielzahl von hydraulisch miteinander kommunizierenden Kapillar-Trennsäulen bei gleich bleibender Förderleistung der alle versorgenden Pumpe mittels konstant gehaltenem Systemdruck zu speisen.

Diese Aufgabe wird gemäß den Ansprüchen 1 und 2 sowie des Anspruchs 7 oder 12 gelöst.

Durch eine druckabhängige Steuerung des für die Analyse genutzten oder aus dem gemeinsamen Förderstrom abgeleiteten und verworfenen Hauptanteils, wird es möglich, auch bei einer Vielzahl von parallelen Kapillar-Trennsäulen-Kanälen sicherzustellen, daß die einzelnen Säulen (die über Verzweigungen gespeist werden) mit einem vorbestimmten, im wesentlichen konstant bleibenden Druck gespeist werden, auch wenn sich der Rückdruck (oder Staudruck) an einem einzelnen (oder auch an mehreren) der Kapillar-Trennsäulen, z.B. infolge Viskositätsänderung des Laufmittels ("mobile Phase") und/oder Zusetzen des Interstitialvolumens in der Packung (stationäre Phase) verschiedener Säulen ansteigen sollte.

Der dadurch auf den Förderstrom wirkende Rückstau wird ausgeglichen, indem automatisch und bevorzugt proportional zu dieser Druckänderung ein Ableitungsquerschnitt für den Hauptanteil des Förderstroms verändert oder angepasst wird, z.B. nach dem Überlaufprinzip.

Mit dieser Maßnahme wird dauerhaft ein Betrieb unter gleichbleibenden Druckbedingungen (der jeweilige zweite Druck) am Eingang aller Kapillar-Trennsäulen gewährleistet, was zu hoher Reproduzierbarkeit der Analysenergebnisse führt. Gleichzeitig kann auf diese Weise sichergestellt werden, daß auch im Langzeit-Dauerbetrieb ein kritisch hoher Systemdruck oder ein für die Kapillar-Trennsäulen kritischer Betriebsdruck nicht überschritten wird.

Ein entsprechendes Analysensystem, wie es Anspruch 6 darstellt, kann vollautomatisch und kontinuierlich betrieben werden.

Mit der Erfindung wird bei hoher Zuverlässigkeit und Reproduzierbarkeit von Analysenergebnissen ein hoher Probendurchsatz (Anzahl je Zeiteinheit) erreicht, bei hoher Analysengenauigkeit, Zuverlässigkeit und Reproduzierbarkeit.

Die Erfindung wird nachfolgend anhand schematischer Zeichnungen zu mehreren Ausführungs**beispielen** erläutert und ergänzt.

Es zeigen:
- **Figur 1**: in vereinfachter Form ein Analysensystem, bei dem das Verfahren gemäß der Erfindung verwirklicht ist.
- **Figur 2**: in größerem Maßstab einen Ausschnitt aus einem solchen System.
- **Figur 3**: ist ein gegenüber dem System nach Figur 1 abgewandeltes System nach der Erfindung.
- **Figur 4,** **Figur 5,** **Figur 6**: an einem konkreten Beispiel die Zuverlässigkeit und Reproduzierbarkeit beim Arbeiten nach dem Verfahren gemäß der Erfindung im Langzeitbetrieb.

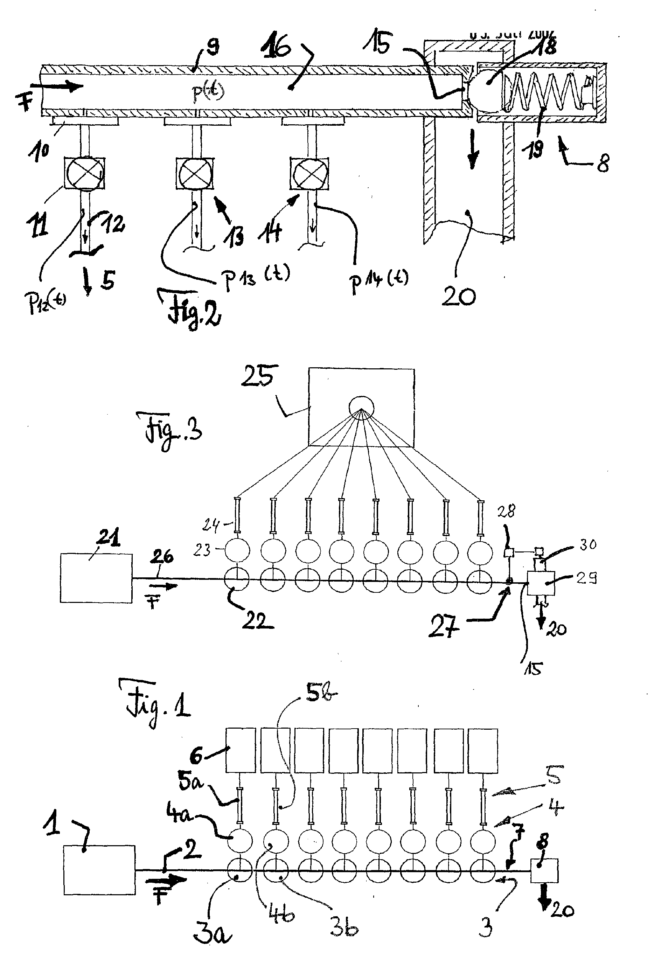

Wie **Figur 1** zeigt, kommt ein nach dem Verfahren gemäß der Erfindung arbeitendes System mit einer einzigen Druckpumpe 1 aus. Diese erzeugt für das Laufmittel (die "mobile Phase") unter entsprechendem Druck einen Förderstrom F, der kontinuierlich in Figur 1 von links nach rechts durch einen Förderkanal 2 fließt. An diesem Förderkanal 2 sind über T-Stücke 3a, 3b (kurz 3) eine Vielzahl von Kapillar-Trennsäulen 5 (mit Feinpartikeln gepackte Kapillar-Trennsäulen 5a, 5b, ...) angeschlossen, die miteinander hydraulisch kommunizieren und die jeweils über ein Probenaufgabeventil 4a, 4b (kurz 4) mit dem jeweiligen T-Stück hydraulisch verbunden sind. Mit 6 sind die Analysengeräte, Detektoren oder Instrumente bezeichnet, die herkömmlich sind und hier nicht näher beschrieben werden müssen.

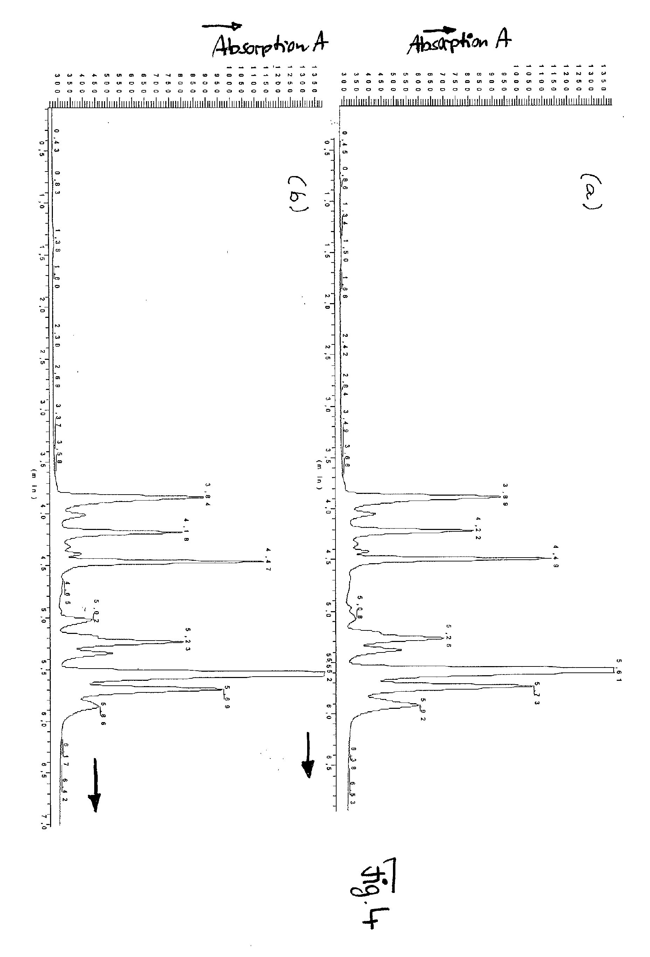

Im Endbereich 7 des Strömungskanals 2 ist ein Konstantdruck-Restriktor 8 als Überlauf vorgesehen. Dieser weist, wie **Figur 2** zeigt, eine Ableitungsöffnung 15 mit einem vorbestimmten (definierten) Ableitungsquerschnitt am Ende des Strömungskanals 9 auf. Im Ableitungsquerschnitt ist ein Ventilelement, z.B. mit einer Ventilkugel 18 angeordnet, die den Querschnitt vollständig verschließen kann. Das Ventilelement 18 steht unter der Vorspannung einer Feder 19. Federkraft und Federweg sind in Abhängigkeit von dem Druck p(t) in dem Förderstrom 16 innerhalb des Förderkanals so eingestellt, daß der Ableitungsquerschnitt proportional zu dem Druck so verändert werden kann, daß der Druck im Förderstrom 16 im wesentlichen konstant bleibt. Dadurch stellt sich in allen vom Einspeisungs-Strömungsbereich 10 abgezweigten Analysekanälen ein definierter, reproduzierbarer Fluss ein. Der auf diese Weise durch die Öffnung 15 abgeleitete Hauptanteil der Flüssigkeitsströmung, deren Volumen pro Zeiteinheit durch den Konstantdruck-Restriktor 8 gesteuert wird, wird nicht zur Durchführung der Analyse verwertet, sondern verworfen und im dargestellten Beispiel der Figur 2 über einen Kanal als Volumenstrom 20 abgeleitet.

Zusätzlich ist es möglich die Federspannung über eine manuell oder elektronische Regulierung zu verstellen, sodass je nach Applikation unterschiedliche Drücke verwendet werden können.

In Figur 2 ist mit 10 ein Fitting für das Anschließen des Probenaufgabe-Ventils 11 und der Kapillar-Trennsäule 12 bezeichnet, während mit 13 und 14 identische und dazu parallele Kapillar-Trennsäulen-Kanäle bzw. Ventile angedeutet sind.

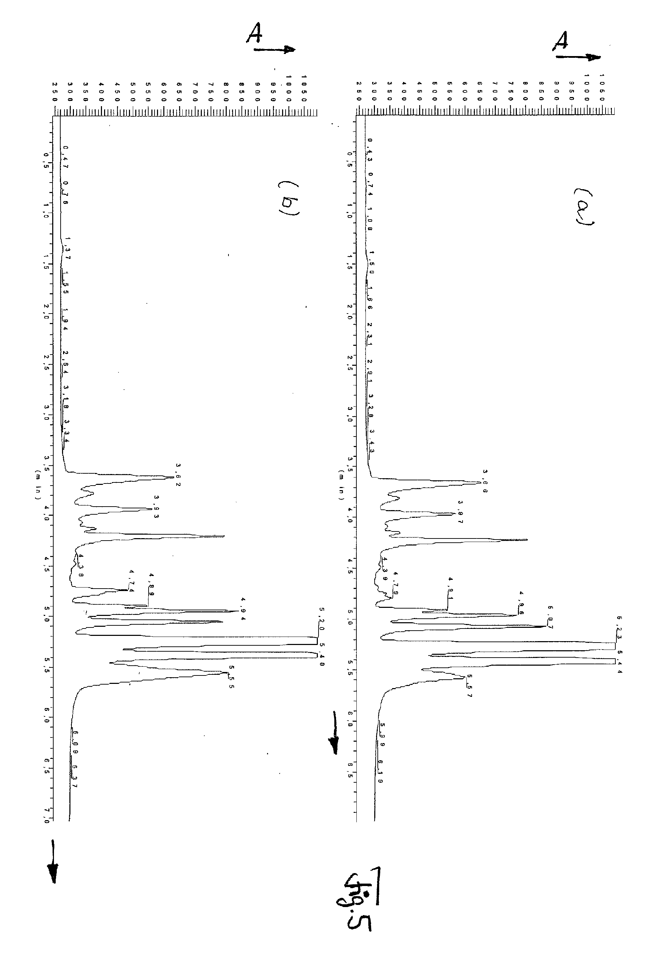

Der Konstantdruck-Restriktor kann auch in der Weise ausgebildet sein, wie dies in **Figur 3** veranschaulicht ist. Hier ist dem Flüssigkeitsstrom in dem Strömungskanal 26 ein Druckmesser 27 zugeordnet, dessen Meßwerte von einer Signalerfassungseinheit 28 ausgewertet und einer Steuereinrichtung 30 zugeleitet werden, welche ein elektrisch oder magnetisch betriebenes Restriktorventil 29 so steuern, daß sich der Ableitungsquerschnitt 15 des Ventils 29 so verändert, daß der Druck am Eingang des Strömungskanals 26 im wesentlichen konstant bleibt.

Figur 3 zeigt die Verwendung des Systems mit nur einem einzigen Detektor (z.B. einem Massenspektometer 25 mit multiplen Einlass) für die Analytik von 8 Trennkanälen. Hierbei wird über ein selektives Trennverfahren in raschem Wechsel (wenige Millisekunden pro Kanal) der Strom eines Kanals zum Detektor geleitet.

Figur 3 unterscheidet sich von Figur 1 dadurch, daß für die Analyse eine andere Vorrichtung 25 gezeigt ist. Mit 21 ist hier die einzige Pumpe des Systems, mit 26 der Strömungskanal, mit 22 die Anschlußfittinge für die Kapillar-Trennsäulen 24 gezeichnet, während 23 die zugehörigen Injektorventile oder synonym die Probenaufgaben-Ventile markiert.

Der Strömungskanal kann gemäß eines weiteren, nicht dargestellten Beispiels auch so ausgestaltet werden, daß ihm zwei oder mehr Ableitungsquerschnitte 15 für den Hauptanteil des Flüssigkeitsstroms zugeordnet sind, wobei jeder Ableitungsöffnung ein eigener Konstantdruck-Restriktor der einen oder der anderen Art zugeordnet ist, und wobei ferner die Restriktoren auf unterschiedliche Betriebsdrücke eingestellt sind. Sie bilden unabhängig voneinander arbeitende Systemvorrichtungen. Über ein entsprechendes Umschaltventil kann für unterschiedliche Analysenbedingungen der eine oder der andere Restriktor in Betrieb gesetzt werden, während die anderen, nicht benutzten Ablaufquerschnitte geschlossen gehalten werden.

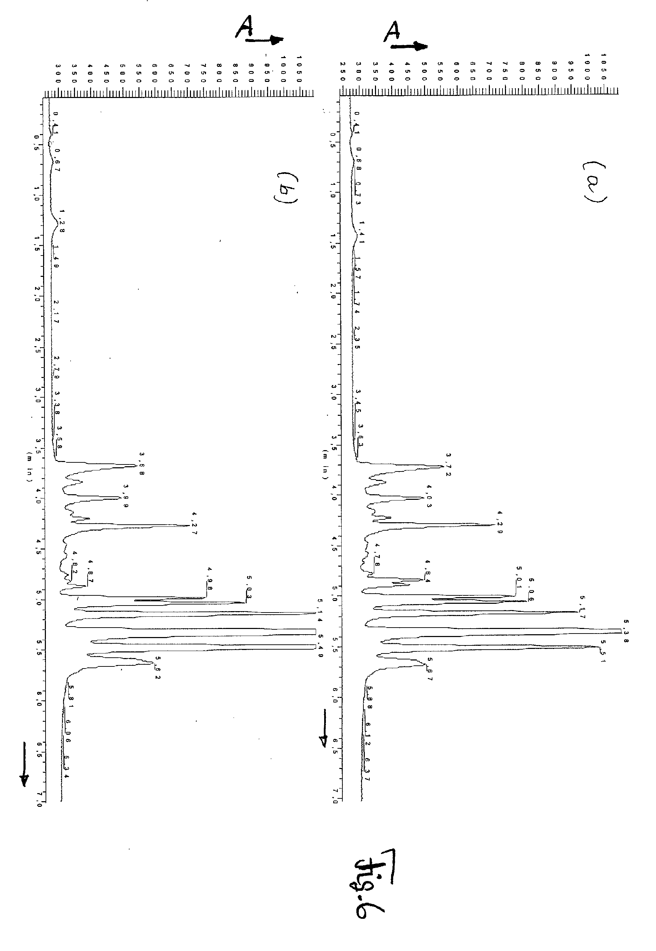

In den **Figuren 4 bis 6** wird an einem konkreten Beispiel eines HPLC-Analysensystems mit vier parallelen Kapillar-Trennsäulen-Kanälen die sehr gute Reproduzierbarkeit und hohe Zuverlässigkeit der Messung bei Anwendung des Verfahrens veranschaulicht. Es handelt sich um vier parallele Kapillar-Trennsäulen-Kanäle in Verbindung mit einem Substanznachweis durch Messung der Absorption von Licht im UV-Bereich. Die Abszisse entspricht der spezifischen Retentionszeit der Analyten (nachgewiesenen chemischen Verbindungen) an der Säule, die Ordinate der Absorption. Jede Figur umfaßt zwei gleichartige Kurven a und b, die so übereinander gelegt sind, dass sie unmittelbar auf Deckungsgleichheit geprüft werden können. Die Figur 4 zeigt die Messungen an einem ersten von vier Kanälen, die Figur 5 an einem zweiten und die Figur 6 an einem dritten Meßkanal von vier parallelen Kapillar-Trennsäulen-Kanälen. In jeder Figur zeigt die Darstellung a die Verhältnisse bei vier offenen Kapillarkanälen, also vier nicht verlegten, d.h. ungehindert durchströmten Meßkanälen oder Nutzkanälen 12,13,14. Für Vergleichsmessungen wurde der vierte Kanal mittels eines Blindstopfens blockiert, was den Verlust von 25% des Durchströmquerschnittes im Trennsäulenbereich bedeutet. Mithin müssen ¼ des Laufmittel-Volumenstroms umgeleitet bzw. abgeleitet werden, bzw. ¼ des Volumenstroms. Dabei wird die spezifische Kompressibilität des geförderten Mediums nicht kompensiert. Es wurde mit einem den Stau ausgleichenden Konstantdruck-Restriktor im Förderkanal gearbeitet und die Meßergebnisse mit und ohne blockiertem vierten Kanal systematisch verglichen. Sie sind in den Abbildungen b der Figuren 4 bis 6 dargestellt.

Überlagert man in den Figuren jeweils die Messkurven a und b, so ist die Deckungsgleichheit augenfällig. Dies bedeutet, daß trotz des Volumenstrom-Überschusses der Betriebsdruck p11(t), ... an (dem Kopf) der verbleibenden Kapillar-Trennsäulen-Kanälen sich nicht in signifikantem Maß verändert hat. Damit ist im wesentlichen gesichert, daß die Reproduzierbarkeit der Meßergebnisse auch unter wechselnden Betriebsbedingungen, d.h. auch bei veränderter Filtrierbarkeit einzelner Kapillar-Trennsäulen die Meßgenauigkeit der nicht betroffenen Analysenkanäle nicht beeinträchtigt wird.

Systematische Versuche unter Feldbedingungen haben gezeigt, dass dies nicht nur für Systeme mit vier parallelen Kapillar-Trennsäulen-Kanälen gilt, sondern daß auf diese Weise im Grunde beliebig viele parallel geschaltete Kapillar-Trennsäulen-Kanäle durch einen gemeinsamen Förderstrom von einer einzigen Pumpe in Verbindung mit nur einer einzigen Splittingeinrichtung zuverlässig betrieben werden können. Voraussetzung ist lediglich, daß die Pumpenleistung hoch genug ist, um am Eingang aller parallelen Analysenkanäle einen einheitlichen Einspeisedruck zu erzeugen. Der daraus resultierende Volumenstrom in jedem einzelnen Kanal ergibt sich aus der Filtrierbarkeit der einzelnen Kapillar-Trennsäulen. Steigt der Rückdruck an einer oder mehreren Trennsäulen, wirkt der als "Shunt" parallel geschaltete Konstantdruck-Restriktor als Überlauf.

Die Praxis hat gezeigt, daß das Volumen im Strömungskanal um mindestens eine Grössenordnung kleiner sein sollte als die Pumpleistung, um zu erreichen daß Änderungen in der Zusammensetzung der Lösungsmittel alle Analysenkanäle möglichst gleichzeitig (± 2 Sekunden) erreichen.

## Patentansprüche

1. **Verfahren** zum Speisen von zumindest zwei parallelen, hydraulisch miteinander kommunizierenden Trennsäulen in einem Analysensystem zur Untersuchung von gelösten Proben, z.B. in der Kapillarsäulen-Flüssigkeits-Chromatographie, bei dem
- eine mobile Phase von einer Druckquelle aus mit einem erhöhtem Druck in Form eines Förderstroms (26,F) den zumindest zwei Trennsäulen über zugehörige Kanäle (12,13) mit nur einem kleinen - für die Durchführung der Analyse genutzten - Anteil des Förderstroms zugespeist wird;
- gleichzeitig ein wesentlich größerer Anteil (20) des Förderstroms abgeleitet wird;
- wobei ein Ableitungsquerschnitt (15) für den größeren Anteil in Abhängigkeit von einem aktuellen ersten Druck im Förderstrom vor den Kanälen so verändert wird, daß zumindest ein zweiter Druck in einem Anteil des den Trennsäulen über den einen (12) der zumindest zwei Kanäle (12,13) zugespeisten kleineren Anteils im wesentlichen konstant bleibt, unabhängig davon, ob sich ein anderer Anteil des kleineren Anteils durch den anderen (13) der zumindest zwei Kanäle verringert.

2. **Verfahren** zum Speisen von mehreren hydraulisch miteinander kommunizierenden Trennsäulen in Analysensystemen über abzweigende Kapillar-Trennsäulen-Kanäle (5) zur Untersuchung von gelösten Proben, bei dem
**(i)** eine mobile Phase von einer Druckquelle aus mit einem erhöhtem Druck in Form eines gemeinsamen Förderstroms den zwei oder mehr abzweigenden Trennsäulen-Kanälen mit nur einem sehr geringen Volumenanteil des Förderstroms zugespeist wird, während ein demgegenüber wesentlich größerer Volumenanteil des Förderstroms abgeleitet wird (20);
**(ii)** wobei ein Ableitungsquerschnitt (15) für den größeren Anteil in Abhängigkeit von einem Druck im Förderstrom verändert wird, um ein Überschreiten eines kritischen Systemdrucks und/oder eines maximal zulässigen Drucks für den Betrieb der eingesetzten Kapillar-Trennsäulen zu verhindern.

3. Verfahren nach Anspruch 1 oder 2, **dadurch gekennzeichnet, daß** der Ableitungsquerschnitt (15) für den Hauptanteil(20) des Förderstroms über ein federbelastetes Ventilelement (19,18) proportional zu auftretenden Druckänderungen im Förderstrom (26,F) automatisch verändert wird.

4. Verfahren nach Anspruch 1 oder 2, **dadurch gekennzeichnet, daß** Druckänderungen im Förderstrom kontinuierlich gemessen (27) und in Abhängigkeit davon der Ableitungsquerschnitt für den Hauptanteil des Förderstroms automatisch so verändert wird (30), dass im Förderstrom ein vorbestimmter Druck im wesentlichen konstant aufrecht gehalten wird.

5. Verfahren nach einem der voranstehenden Ansprüche, **dadurch gekennzeichnet, daß** zur Erzeugung des gemeinsamen Förderstroms nur eine einzige Pumpe (21) verwendet wird.

6. Verfahren nach einem der voranstehenden Ansprüche, wobei ein Anteil des kleineren Volumenstroms jeweils in einem nicht blockierten Kanal strömt und einer jeweiligen Trennsäule zugespeist wird, wobei ein jeweils zugehöriger zweiter Druck im wesentlichen konstant bleibt.

7. **Mehrkanalsystem** für die Analyse von gelösten Proben mittels Kapillarsäulen-Flüssigkeits-Chromatographie, mit nur einer einzigen Pumpe (1;21) zur Erzeugung eines kontinuierlichen Förderstroms einer mobilen Phase in einem Haupt-Strömungskanal (2) als Einspeisungssystem, mit zwei oder mehr als zwei von einem stark herabgesetzten Anteil des Förderstroms durchströmbaren Kapillar-Trennsäulen-Kanälen (5), die an den Strömungskanal (2,26) angeschlossen sind, mit einer Ableitung (8) in einem stromabwärts liegenden Endbereich des Strömungskanals (2,26) zum Ableiten eines Hauptanteils des Förderstroms über einen Ableitungsquerschnitt (15), der in Abhängigkeit von Druckänderungen im Einspeisungssystem so veränderbar ist, daß den mehreren Kapillar-Trennsäulen-Kanälen (5) der weit kleinere (gesplittete) Anteil als mobile Phase jeweils unter einem im wesentlichen konstanten Druck zuspeisbar sind.

8. Mehrkanalsystem nach Anspruch 7, **dadurch gekennzeichnet, daß** dem Ableitungsquerschnitt (15) des Strömungskanals (9) ein in proportionaler Abhängigkeit vom Druck im Einspeisungssystem arbeitendes federbelastetes (19) Ventilelement (18) zugeordnet ist.

9. Mehrkanalsystem nach Anspruch 7, **dadurch gekennzeichnet, daß** dem Ableitungsquerschnitt ein in Abhängigkeit von einem im Einspeisungssystem gemessenen (27) Druck steuerbares Ableitungsventil (29,30) zugeordnet ist.

10. Mehrkanalsystem nach Anspruch 9 oder 8, **dadurch gekennzeichnet, daß** der Strömungskanal (26) zumindest zwei unterschiedliche Ableitungsquerschnitte mit je einem Ableitungsventil und einer Umschaltvorrichtung zur Auswahl eines der Ableitungsquerschnitte aufweist.

11. Mehrkanalsystem nach Anspruch 7, wobei ein Querschnitt der Kapillarkanäle (5) mehr als 10 mal kleiner ist als ein Querschnitt des Haupt-Strömungskanals (2,26).

12. **Verfahren** zum Speisen von zwei oder mehr parallelen, hydraulisch miteinander kommunizierenden Trennsäulen in Analysensystemen zur Untersuchung von gelösten Proben, mittels Kapillarsäulen-Flüssigkeits-Chromatographie, bei dem eine mobile Phase von einer Druckquelle aus mit erhöhtem Druck in Form eines gemeinsamen Förderstroms den zwei oder mehr parallelen Kapillar-Trennsäulen mit nur einem Anteil des Förderstroms zugespeist wird, während gleichzeitig ein anderer, vorzugsweise wesentlich größerer Anteil des Förderstroms abgeleitet wird, wobei der Ableitungsquerschnitt für diesen Anteil in Abhängigkeit vom Druck im Förderstrom des Einspeisungssystems so verändert wird, daß der Druck des den Kapillarkanälen zugespeisten und für die Durchführung der Analyse genutzten Anteils im wesentlichen konstant bleibt, unabhängig davon, ob sich der Volumenstrom durch einen oder mehrere der Kapillar-Trennsäulen-Kanäle (5) verringert oder ganz unterbrochen wird.
